# EUROPÄISCHE PATENTANMELDUNG

(11) **EP 3 933 186 A1**
(43) Veröffentlichungstag der Anmeldung: **05.01.2022**
(21) Anmeldenummer: 21183213.4
(22) Anmeldetag: 01.07.2021
(51) Int. Cl.: F02F 3/12

(54) **KOLBEN FÜR EINE BRENNKRAFTMASCHINE SOWIE BRENNKRAFTMASCHINE**

(30) Priorität: 03.07.2020 DE 102020208366
(71) Anmelder: MAHLE International GmbH, 70376 Stuttgart (DE)
(72) Erfinder: LECKER, Alois, 70597 Stuttgart (DE); ROSE, Reinhard, 70736 Fellbach (DE)
(74) Vertreter: BRP Renaud & Partner mbB Rechtsanwälte Patentanwälte Steuerberater

(57) **Zusammenfassung**

Die Erfindung betrifft einen Kolben (1) für eine Brennkraftmaschine (11), welcher einen Kolbenboden (3) mit einer Außenfläche (2) umfasst. Außerdem umfasst der Kolben (1) eine Wärmemanagement-Beschichtung (4), welche zumindest bereichsweise auf der Außenfläche (2) des Kolbenbodens (3) angeordnet ist, wobei die Wärmemanagement-Beschichtung (4) eine Grundschicht (5) und eine Funktionsschicht (6) umfasst. Die Grundschicht (5) ist an der Außenfläche (2) des Kolbenbodens (3) anliegend zwischen dem Kolbenboden (3) und der Funktionsschicht (6) angeordnet, wobei die Grundschicht (5) eine Grundschichtmatrix mit einem ersten Polysilazan umfasst oder aus dem ersten Polysilazan besteht, und die Funktionsschicht eine Funktionsschichtmatrix mit einem - vom ersten Polysilazan verschiedenen - zweiten Polysilazan umfasst oder aus dem zweiten Polysilazan besteht.

## Beschreibung

Um eine Temperaturbeständigkeit von Kolben für eine Brennkraftmaschine zu verbessern, werden solche Kolben seit geraumer Zeit an einer Außenfläche eines Kolbenbodens des Kolbens mit Beschichtungen versehen. Darüber hinaus kann mittels solcher Beschichtungen auch ein Oxidationsschutz der beschichteten Außenfläche des Kolbens erreicht werden. Eine solche Außenfläche des Kolbenbodens begrenzt dabei typischerweise in einer Brennkraftmaschine mit dem Kolben einen Brennraum der Brennkraftmaschine teilweise.

Vor diesem Hintergrund ist aus der EP 2 818 677 A1 ein Kolben für eine Brennkraftmaschine bekannt, auf dessen Außenfläche zur Verbesserung der Temperaturbeständigkeit des Kolbens eine dreischichtige Wärmemanagement-Beschichtung angeordnet ist, die ein anorganisches Polysilazan umfasst.

Es erweist sich dabei jedoch als nachteilig, dass mittels einer solchen Wärmemanagement-Beschichtung eine unzulässige Wärmeaufnahme des Kolbenbodens, welche im schlimmsten Fall zu einem Versagen des Kolbens führen kann, in nur unzureichender Weise vermieden werden kann.

Es ist daher eine Aufgabe der vorliegenden Erfindung - insbesondere zur Beseitigung des voranstehend aufgezeigten Nachteils - für Kolben sowie für Brennkraftmaschinen mit einem solchen Kolben neue Wege aufzuzeigen.

Diese Aufgabe wird durch den Kolben gemäß dem unabhängigen Patentanspruch 1 sowie durch den Kolben gemäß dem unabhängigen Patentanspruch 3 und die Brennkraftmaschine gemäß dem unabhängigen Patentanspruch 15 gelöst. Bevorzugte Ausführungsformen sind Gegenstand der abhängigen Patentansprüche.

Grundidee der Erfindung ist demnach, einen Kolben für eine Brennkraftmaschine anzugeben, welcher an einer Außenfläche eines Kolbenbodens des Kolbens mit einer Wärmemanagement-Beschichtung beschichtet ist, welche eine Grundschicht und eine Funktionsschicht umfasst. Dabei weist die Grundschicht gemäß einem ersten Aspekt der Erfindung ein erstes Polysilazan und die Funktionsschicht ein von dem ersten Polysilazan verschiedenes zweites Polysilazan auf. Gemäß einem zweiten Aspekt der Erfindung umfasst die Grundschicht Nickel oder mit Aluminiumflocken gefülltes Siliziumdioxid und die Funktionsschicht ein organisches Polysilazan.

Vorteilhaft verhindert eine solche Wärmemanagement-Beschichtung besonders wirksam eine übermäßige Wärmeaufnahme des Kolbenbodens bzw. des Kolbens, so dass eine Temperaturbeständigkeit des Kolbens insgesamt verbessert wird. Außerdem kann mittels der Wärmemanagement-Beschichtung in vorteilhafter Weise ein Oxidationsschutz der beschichteten Außenfläche des Kolbenbodens verbessert werden.

Ein Kolben gemäß einem ersten Aspekt der Erfindung, welcher für eine Brennkraftmaschine, insbesondere für eine Brennkraftmaschine eines Kraftfahrzeugs, einsetzbar ist, umfasst einen Kolbenboden, welcher eine Außenfläche aufweist. Diese Außenfläche des Kolbens ist vorzugsweise stirnseitig an dem Kolbenboden angeordnet. Der Kolbenboden umfasst zweckmäßig ein Kolbenmaterial mit einer Aluminiumlegierung oder einer Eisenlegierung oder besteht aus einem Kolbenmaterial mit einer Aluminiumlegierung oder einer Eisenlegierung. Der Kolben umfasst außerdem eine Wärmemanagement-Beschichtung, welche zumindest bereichsweise auf der Außenfläche des Kolbenbodens angeordnet ist. Die Wärmemanagement-Beschichtung umfasst eine Grundschicht und eine Funktionsschicht. Die Grundschicht der Wärmemanagement-Beschichtung ist an der Außenfläche des Kolbenbodens anliegend und zwischen dem Kolbenboden und der Funktionsschicht der Wärmemanagement-Beschichtung angeordnet. Dabei umfasst die Grundschicht eine Grundschichtmatrix mit einem ersten Polysilazan oder besteht aus dem ersten Polysilazan. Die Funktionsschicht umfasst eine Funktionsschichtmatrix mit einem zweiten Polysilazan, welches vom ersten Polysilazan verschieden ist. Alternativ besteht die Funktionsschicht aus dem zweiten Polysilazan. Eine solche Wärmemanagement-Beschichtung schützt den Kolbenboden besonders wirksam vor einem übermäßigen Wärmeeintrag und verhindert oder verzögert zumindest eine Oxidation des Kolbenbodens besonders gut.

Bei einer vorteilhaften Weiterbildung des Kolbens gemäß dem ersten Aspekt der Erfindung ist das erste Polysilazan ein anorganisches Polysilazan und das zweite Polysilazan ein organisches Polysilazan oder umgekehrt. Mittels des organischen Polysilazans lassen sich vorteilhaft besonders große Schichtdicken der Wärmemanagement-Beschichtung erreichen, womit ein besonders guter Schutz des Kolbenbodens vor einem übermäßigen Wärmeeintrag erreicht wird. Außerdem kann das organische Polysilazan besonders einfach mit Additiven versetzt werden, um die Eigenschaften der Wärmemanagement-Beschichtung zu optimieren.

Ein Kolben gemäß einem zweiten Aspekt der Erfindung, welcher für eine Brennkraftmaschine, zweckmäßigerweise für ein Kraftfahrzeug, einsetzbar ist, umfasst einen Kolbenboden, welcher eine Außenfläche aufweist. Diese Außenfläche des Kolbens ist vorzugsweise stirnseitig an dem Kolbenboden angeordnet. Der Kolbenboden umfasst bevorzugt ein Kolbenmaterial mit einer Aluminiumlegierung oder einer Eisenlegierung oder besteht aus einem Kolbenmaterial mit einer Aluminiumlegierung oder einer Eisenlegierung. Der Kolben weist außerdem eine Wärmemanagement-Beschichtung auf, welche zumindest bereichsweise auf der Außenfläche des Kolbenbodens angeordnet ist. Die Wärmemanagement-Beschichtung umfasst eine Grundschicht und eine Funktionsschicht. Die Grundschicht ist an der Außenfläche des Kolbenbodens anliegend zwischen dem Kolbenboden und der Funktionsschicht angeordnet. Die Grundschicht umfasst Nickel oder Siliziumdioxid, welches mit Aluminiumflocken gefüllt ist. Alternativ besteht die Grundschicht aus Nickel oder mit Aluminiumflocken gefülltem Siliziumdioxid. Die Funktionsschicht umfasst eine Funktionsschichtmatrix mit einem organischen Polysilazan oder besteht aus dem organischen Polysilazan. Mittels eines solchen organischen Polysilazans lassen sich, wie voranstehend bereits aufgezeigt, vorteilhaft besonders große Schichtdicken der Wärmemanagement-Beschichtung erreichen, womit eine unerwünschte Wärmeaufnahme des Kolbenbodens besonders wirksam vermindert werden kann. Außerdem ist das organische Polysilazan besonders gut additivierbar, so dass die Wärmemanagement-Beschichtung besonders gut im Hinblick auf optimale Eigenschaften einstellbar ist.

Bei einer vorteilhaften Weiterbildung des Kolbens gemäß beiden Aspekten der Erfindung weist die Grundschicht der Wärmemanagement-Beschichtung eine senkrecht zur Außenfläche des Kolbenbodens gemessene Grundschichtdicke von 0,2 µm bis 2 µm auf. Besonders bevorzugt beträgt die Grundschichtdicke der Grundschicht 0,2 µm bis 0,6 µm. Eine solche Grundschicht sorgt vorteilhaft für eine besonders gute Haftung der Wärmemanagement-Beschichtung an der Außenfläche des Kolbenbodens.

Eine weitere vorteilhafte Weiterbildung des Kolbens gemäß beiden Aspekten der Erfindung sieht vor, dass die Funktionsschicht eine senkrecht zur Außenfläche des Kolbenbodens gemessene Funktionsschichtdicke von 50 µm bis 100 µm aufweist. Vorzugsweise beträgt die Funktionsschichtdicke der Funktionsschicht 50 µm bis 70 µm. Eine derart ausgebildete Funktionsschicht erweist sich als besonders wärmeisolierend.

Bei einer weiteren bevorzugten Weiterbildung des Kolbens gemäß beiden Aspekten der Erfindung umfasst die Funktionsschicht Hohlpartikel, die in der Funktionsschichtmatrix der Funktionsschicht füllstoffartig eingebettet sind. Dies verstärkt die wärmeisolierende Wirkung der Funktionsschicht.

Zweckmäßig sind die Hohlpartikel als Hohlkugeln ausgebildet. Solche Hohlkugeln sind besonders kostengünstig herstellbar.

Gemäß einer weiteren bevorzugten Weiterbildung des Kolbens nach beiden Aspekten der Erfindung umfassen die Hohlpartikel Glas oder bestehen aus Glas. Vorteilhaft sind solche gläsernen Hohlpartikel besonders einfach herstellbar und außerdem im Hinblick auf die zur Herstellung einzusetzenden Rohstoffe besonders kostengünstig.

Bei einer weiteren bevorzugten Weiterbildung des Kolbens gemäß beiden Aspekten der Erfindung umfasst die Funktionsschicht Metallflocken, die in der Funktionsschichtmatrix füllstoffartig eingebettet sind. Mittels solcher Metallflocken lässt sich die wärmeabschirmende Wirkung der Funktionsschicht noch weiter verbessern. Außerdem weist eine solche mit Metallflocken gefüllte Funktionsschicht eine besonders große mechanische Festigkeit auf.

Bei einer weiteren bevorzugten Weiterbildung des Kolbens gemäß beiden Aspekten der Erfindung umfasst die Funktionsschicht Glimmer, welcher in der Funktionsschichtmatrix füllstoffartig eingebettet ist. Dies bedeutet, dass der in der Funktionsschicht enthaltene Glimmer in Form von Glimmer-Partikeln vorliegen kann. Insbesondere können die Glimmer-Partikel als Glimmer-Plättchen ausgebildet sein, was bedeutet, dass die Glimmer-Partikel jeweils die Geometrie eines Plättchens aufweisen. Mittels des Glimmers lässt sich eine Temperaturbeständigkeit der Funktionsschicht steigern.

Eine weitere vorteilhafte Weiterbildung des Kolbens gemäß beiden Aspekten der Erfindung sieht vor, dass die Wärmemanagement-Beschichtung eine Deckschicht umfasst, die vom Kolbenboden abgewandt auf der Funktionsschicht angeordnet ist. Vorzugsweise ist diese Deckschicht bis wenigstens 650°C temperaturbeständig. Eine solche Deckschicht schützt die Wärmemanagement-Beschichtung vorteilhaft vor mechanischen, thermischen und/oder chemischen Einflüssen.

Bei einer weiteren bevorzugten Weiterbildung des Kolbens gemäß beiden Aspekten der Erfindung umfasst die Deckschicht ein anorganisches Polysilazan oder besteht aus einem anorganischen Polysilazan. Eine derartige Deckschicht haftet besonders gut auf der Funktionsschicht.

Eine weitere bevorzugte Weiterbildung des Kolbens gemäß beiden Aspekten der Erfindung sieht vor, dass die Deckschicht ein Metall umfasst oder aus einem Metall besteht. Eine derartige Deckschicht ist besonders kostengünstig herstellbar.

Bei einer weiteren bevorzugten Weiterbildung des Kolbens gemäß beiden Aspekten der Erfindung weist die Deckschicht eine senkrecht zur Außenfläche des Kolbenbodens gemessene Deckschichtdicke von 5 µm bis 10 µm auf. Eine solche Deckschicht erweist sich als besonders wirksam.

Eine weitere vorteilhafte Weiterbildung des Kolbens gemäß beiden Aspekten der Erfindung sieht vor, dass die Deckschicht porenfrei oder geschlossen-porös ausgebildet ist, so dass die Deckschicht die Funktionsschicht der Wärmemanagement-Beschichtung im Wesentlichen gasundurchlässig abdeckt. Dies erlaubt einen besonders guten Schutz der Funktionsschicht der Wärmemanagement-Beschichtung mittels der Deckschicht.

Die Erfindung betrifft außerdem eine Brennkraftmaschine, welche vorzugsweise für ein Kraftfahrzeug einsetzbar ist. Die Brennkraftmaschine umfasst wenigstens einen Zylinder. Außerdem umfasst die Brennkraftmaschine einen Kolben gemäß dem ersten oder dem zweiten Aspekt der Erfindung, wie voranstehend beschrieben. Der Kolben der Brennkraftmaschine ist in dem Zylinder der Brennkraftmaschine geführt. Der Kolben begrenzt mit seiner Außenfläche gemeinsam mit dem Zylinder einen Brennraum der Brennkraftmaschine teilweise. Die voranstehend aufgezeigten Vorteile des Kolbens gemäß den beiden Aspekten der Erfindung übertragen sich auch auf die erfindungsgemäße Brennkraftmaschine mit einem solchen Kolben.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

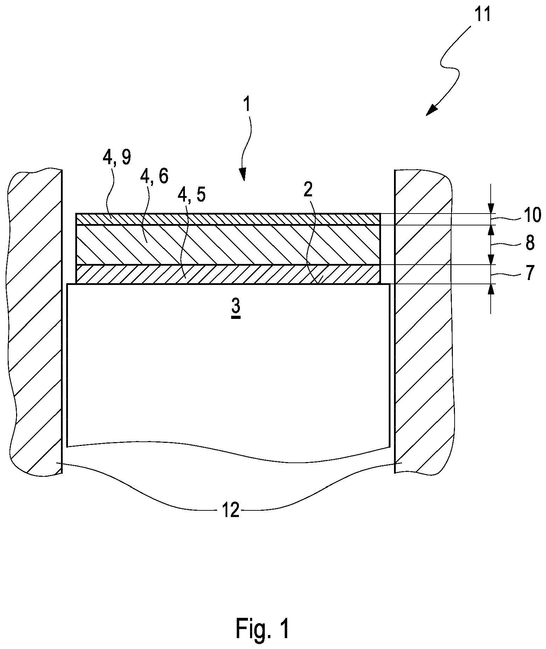

Die einzige Figur 1 zeigt grobschematisch ein Beispiel einer erfindungsgemäßen Brennkraftmaschine 11, welche für ein Kraftfahrzeug einsetzbar ist. Die Brennkraftmaschine 11 umfasst einen Zylinder 12. In dem Zylinder 12 der Brennkraftmaschine 11 ist ein ebenfalls beispielhaft in der Figur 1 gezeigter erfindungsgemäßer Kolben 1 geführt. Der Kolben 1 begrenzt mit einer, beispielsweise stirnseitigen, Außenfläche 2 des Kolbens 1 gemeinsam mit dem Zylinder 12 einen Brennraum der Brennkraftmaschine 11 teilweise.

Dabei illustriert die Figur 1 einen Kolben 1 gemäß einem ersten Aspekt der Erfindung. Demnach weist der Kolben 1 einen Kolbenboden 3 auf, welcher die Außenfläche 2 umfasst. Außerdem umfasst der Kolben 1 eine Wärmemanagement-Beschichtung 4, die zumindest bereichsweise auf der Außenfläche 2 des Kolbenbodens 3 angeordnet ist. Die Wärmemanagement-Beschichtung 4 des Kolbens 1 umfasst eine Grundschicht 5 und eine Funktionsschicht 6. Dabei ist die Grundschicht 5 an der Außenfläche 2 des Kolbenbodens 3 anliegend zwischen dem Kolbenboden 3 und der Funktionsschicht 6 angeordnet. Die Grundschicht 5 umfasst eine Grundschichtmatrix mit einem ersten Polysilazan oder besteht aus dem ersten Polysilazan. Die Funktionsschicht 6 umfasst eine Funktionsschichtmatrix mit einem - vom ersten Polysilazan verschiedenen - zweiten Polysilazan oder besteht aus dem zweiten Polysilazan. Dabei ist gemäß dem ersten Aspekt der Erfindung das erste Polysilazan ein anorganisches Polysilazan und das zweite Polysilazan ein organisches Polysilazan oder umgekehrt.

Außerdem illustriert die Figur 1 beispielhaft einen Kolben 1 für eine Brennkraftmaschine 11 gemäß einem zweiten Aspekt der Erfindung, welcher für ein Kraftfahrzeug einsetzbar ist. Demnach umfasst der Kolben 1 einen Kolbenboden 3, welcher die Außenfläche 2 aufweist. Ferner umfasst der Kolben 1 eine Wärmemanagement-Beschichtung 4, welche zumindest bereichsweise auf der Außenfläche 2 des Kolbenbodens 3 angeordnet ist. Dabei umfasst die Wärmemanagement-Beschichtung 4 des Kolbens 1 eine Grundschicht 5 und eine Funktionsschicht 6. Die Grundschicht 5 ist an der Außenfläche 2 des Kolbenbodens 3 anliegend zwischen dem Kolbenboden 3 und der Funktionsschicht 6 angeordnet. Dabei umfasst die Grundschicht 5 gemäß dem zweiten Aspekt der Erfindung Nickel oder mit Aluminiumflocken gefülltes Siliziumdioxid oder besteht aus Nickel oder mit Aluminiumflocken gefülltem Siliziumdioxid. Die Funktionsschicht 6 umfasst eine Funktionsschichtmatrix mit organischem Polysilazan oder besteht aus organischem Polysilazan.

Wie anhand der Figur 1 außerdem nachzuvollziehen, weist die Grundschicht 5 des Kolbens 1 gemäß beiden Aspekten der Erfindung eine senkrecht zur Außenfläche 2 des Kolbenbodens 3 gemessene Grundschichtdicke 7 auf. Die Grundschichtdicke 7 der Grundschicht 5 beträgt 0,2 µm bis 2 µm, im gezeigten Beispiel 0,2 µm bis 0,6 µm. Die Funktionsschicht 6 weist eine senkrecht zur Außenfläche 2 des Kolbenbodens 3 gemessene Funktionsschichtdicke 8 auf. Die Funktionsschichtdicke 8 der Funktionsschicht 6 beträgt 50 µm bis 100 µm, im gezeigten Beispiel 50 µm bis 70 µm. Die Funktionsschicht 6 umfasst Hohlpartikel, welche in der Funktionsschichtmatrix der Funktionsschicht 6 füllstoffartig eingebettet sind. Die Hohlpartikel sind als Hohlkugeln ausgebildet. Solche Hohlkugeln können fertigungsbedingt eine von einer idealen Kugel geringfügig abweichende Geometrie aufweisen. Die Hohlpartikel umfassen Glas oder bestehen aus Glas. Die Funktionsschicht 6 der Wärmemanagement-Beschichtung 4 umfasst außerdem Metallflocken, welche in der Funktionsschichtmatrix der Funktionsschicht 6 füllstoffartig eingebettet sind. Darüber hinaus umfasst die Funktionsschicht 6 Glimmer, welcher in der Funktionsschichtmatrix füllstoffartig eingebettet ist. Der Glimmer kann durch Glimmer-Plättchen gebildet sein, d.h. die Glimmer-Partikel besitzen in dieser Variante jeweils die Geometrie eines Plättchens.

Es ist in der Figur 1 außerdem gezeigt, dass die Wärmemanagement-Beschichtung 4 eine Deckschicht 9 umfasst, welche vom Kolbenboden 3 abgewandt auf der Funktionsschicht 6 angeordnet ist. Dabei ist die Deckschicht 9 im gezeigten Beispiel bis wenigstens 650°C temperaturbeständig. Die Deckschicht 9 umfasst ein anorganisches Polysilazan oder besteht aus einem anorganischen Polysilazan. Alternativ umfasst die Deckschicht ein Metall oder besteht aus einem Metall. Die Deckschicht 9 weist eine senkrecht zur Außenfläche 2 des Kolbenbodens 3 gemessene Deckschichtdicke 10 auf. Die Deckschichtdicke 10 der Deckschicht 9 beträgt 5 µm bis 10 µm. Die Deckschicht 9 ist porenfrei oder geschlossen-porös ausgebildet. Dies bedeutet, dass die Deckschicht 9 keine Poren oder lediglich geschlossene Poren aufweist. Dabei ist die Deckschicht 9 derart porenfrei oder geschlossen-porös ausgebildet, dass die Deckschicht 9 die Funktionsschicht 6 der Wärmemanagement-Beschichtung 4 im Wesentlichen gasundurchlässig abdeckt.

Der Kolbenboden 3 des Kolbens 1 umfasst beispielsweise ein Kolbenmaterial mit einer Aluminiumlegierung oder besteht aus einem Kolbenmaterial mit einer solchen Aluminiumlegierung. Alternativ umfasst der Kolbenboden 3 des Kolbens 1 ein Kolbenmaterial mit einer Eisenlegierung oder besteht aus einem Kolbenmaterial mit einer solchen Eisenlegierung.

## Patentansprüche

1. Kolben (1) für eine Brennkraftmaschine (11), insbesondere für ein Kraftfahrzeug,
- mit einem eine Außenfläche (2) aufweisenden Kolbenboden (3), welcher vorzugsweise ein Kolbenmaterial mit einer Aluminiumlegierung oder einer Eisenlegierung umfasst oder aus einem Kolbenmaterial mit einer Aluminiumlegierung oder einer Eisenlegierung besteht,
- mit einer Wärmemanagement-Beschichtung (4), welche zumindest bereichsweise auf der Außenfläche (2) des Kolbenbodens (3) angeordnet ist,
- wobei die Wärmemanagement-Beschichtung (4) eine Grundschicht (5) und eine Funktionsschicht (6) umfasst,
- wobei die Grundschicht (5) an der Außenfläche (2) des Kolbenbodens (3) anliegend zwischen dem Kolbenboden (3) und der Funktionsschicht (6) angeordnet ist,
- wobei die Grundschicht (5) eine Grundschichtmatrix mit einem ersten Polysilazan umfasst oder aus dem ersten Polysilazan besteht,
- wobei die Funktionsschicht (6) eine Funktionsschichtmatrix mit einem - vom ersten Polysilazan verschiedenen - zweiten Polysilazan umfasst oder aus dem zweiten Polysilazan besteht.

2. Kolben (1) nach Anspruch 1,
**dadurch gekennzeichnet, dass**
das erste Polysilazan ein anorganisches Polysilazan und das zweite Polysilazan ein organisches Polysilazan ist oder umgekehrt.

3. Kolben (1) für eine Brennkraftmaschine (11), insbesondere für ein Kraftfahrzeug,
- mit einem eine Außenfläche (2) aufweisenden Kolbenboden (3), welcher vorzugsweise ein Kolbenmaterial mit einer Aluminiumlegierung oder einer Eisenlegierung umfasst oder aus einem Kolbenmaterial mit einer Aluminiumlegierung oder einer Eisenlegierung besteht,
- mit einer Wärmemanagement-Beschichtung (4), welche zumindest bereichsweise auf der Außenfläche (2) des Kolbenbodens (3) angeordnet ist,
- wobei die Wärmemanagement-Beschichtung (4) eine Grundschicht (5) und eine Funktionsschicht (6) umfasst,
- wobei die Grundschicht (5) an der Außenfläche (2) des Kolbenbodens (3) anliegend zwischen dem Kolbenboden (3) und der Funktionsschicht (6) angeordnet ist,
- wobei die Grundschicht (5) Nickel oder mit Aluminiumflocken gefülltes Siliziumdioxid umfasst oder aus Nickel oder mit Aluminiumflocken gefülltem Siliziumdioxid besteht,
- wobei die Funktionsschicht (6) eine Funktionsschichtmatrix mit organischem Polysilazan umfasst oder aus dem organischen Polysilazan besteht.

4. Kolben (1) nach einem der Ansprüche 1 bis 3,
**dadurch gekennzeichnet, dass**
die Grundschicht (5) eine senkrecht zur Außenfläche (2) des Kolbenbodens (3) gemessene Grundschichtdicke (7) von 0,2 Mikrometer bis 2 Mikrometer, vorzugsweise von 0,2 Mikrometer bis 0,6 Mikrometer, aufweist.

5. Kolben (1) nach einem der vorhergehenden Ansprüche,
**dadurch gekennzeichnet, dass**
die Funktionsschicht (6) eine senkrecht zur Außenfläche (2) des Kolbenbodens (3) gemessene Funktionsschichtdicke (8) von 50 Mikrometer bis 100 Mikrometer, vorzugsweise von 50 Mikrometer bis 70 Mikrometer, aufweist.

6. Kolben (1) nach einem der vorhergehenden Ansprüche,
**dadurch gekennzeichnet, dass**
die Funktionsschicht (8) Hohlpartikel umfasst, welche in der Funktionsschichtmatrix füllstoffartig eingebettet sind.

7. Kolben (1) nach Anspruch 6,
**dadurch gekennzeichnet, dass**
- die Hohlpartikel als Hohlkugeln ausgebildet sind,
- wobei die Hohlpartikel bevorzugt Glas umfassen oder aus Glas bestehen.

8. Kolben (1) nach einem der vorhergehenden Ansprüche,
**dadurch gekennzeichnet, dass**
die Funktionsschicht (6) Metallflocken umfasst, welche in der Funktionsschichtmatrix füllstoffartig eingebettet sind.

9. Kolben (1) nach einem der vorhergehenden Ansprüche,
**dadurch gekennzeichnet, dass**
die Funktionsschicht (6) Glimmer, insbesondere Glimmer-Plättchen, umfasst, welcher/welche in der Funktionsschichtmatrix füllstoffartig eingebettet ist/sind.

10. Kolben (1) nach einem der vorhergehenden Ansprüche,
**dadurch gekennzeichnet, dass**
die Wärmemanagement-Beschichtung (4) eine, insbesondere bis wenigstens 650 °C temperaturbeständige, Deckschicht (9) umfasst, welche vom Kolbenboden (3) abgewandt auf der Funktionsschicht (6) angeordnet ist.

11. Kolben (1) nach Anspruch 10,
**dadurch gekennzeichnet, dass**
die Deckschicht (9) ein anorganisches Polysilazan umfasst oder aus einem anorganischen Polysilazan besteht.

12. Kolben (1) nach Anspruch 10,
**dadurch gekennzeichnet, dass**
die Deckschicht (9) ein Metall umfasst oder aus einem Metall besteht.

13. Kolben (1) nach einem der Ansprüche 10 bis 12,
**dadurch gekennzeichnet, dass**
die Deckschicht (9) eine senkrecht zur Außenfläche (2) des Kolbenbodens (3) gemessene Deckschichtdicke (10) von 5 Mikrometer bis 10 Mikrometer aufweist.

14. Kolben (1) nach einem der Ansprüche 10 bis 13,
**dadurch gekennzeichnet, dass**
die Deckschicht (9) porenfrei oder geschlossen-porös ausgebildet ist, sodass die Deckschicht (9) die Funktionsschicht (6) der Wärmemanagement-Beschichtung (4) im Wesentlichen gasundurchlässig abdeckt.

15. Brennkraftmaschine (11), insbesondere für ein Kraftfahrzeug,
- mit einem Zylinder (12),
- mit einem Kolben (1) nach einem der vorhergehenden Ansprüche, welcher in dem Zylinder (12) entlang einer Hubrichtung beweglich geführt ist und welcher mit seiner Außenfläche (2) gemeinsam mit dem Zylinder (12) einen Brennraum der Brennkraftmaschine (11) teilweise begrenzt.
